# FASCICULE DE BREVET EUROPEEN

(11) **EP 1 156 672 B1**
(45) Date de publication et mention de la délivrance du brevet: **06.08.2003**
(21) Numéro de dépôt: 01400971.6
(22) Date de dépôt: 13.04.2001
(51) Int. Cl.: H04N 5/217, G02B 23/12

(54) **Caméra infra-rouge comportant un dispositif de calibration**
Infrarotkamera mit Kalibriervorrichtung
Infrared camera including calibration device

(30) Priorité: 19.05.2000 FR 0006438
(43) Date de publication de la demande: 21.11.2001
(73) Titulaire: SAGEM S.A., 75015 Paris (FR)
(72) Inventeur: Colentier, Sylvie, 92270 Bois-Colombes (FR); Labrousse, Xavier, 92800 Puteaux (FR); Chevalier, Jean-Marc, 94420 Le Plessis Trevise (FR)
(74) Mandataire: Fort, Jacques

(56) Documents cités:
- EP-A- 0 465 060
- EP-A- 0 549 446
- FR-A- 2 698 700
- US-A- 5 400 161
- PATENT ABSTRACTS OF JAPAN vol. 016, no. 101 (E-1177), 12 mars 1992 (1992-03-12) -& JP 03 278680 A (TECH RES & DEV INST OF JAPAN DEF AGENCY), 10 décembre 1991 (1991-12-10)

## Description

La présente invention concerne les caméras infra-rouge à dispositif de calibration, et notamment les caméras infra-rouge sensibles dans les bandes spectrales de l'infrarouge thermique (3 à 5 µm ou 8 à 12 µm), utilisant un détecteur constitué par une matrice bidimensionnelle de sites ou « pixels » photosensibles.

Ces matrices doivent être périodiquement calibrées sur une ou deux références de températures uniformes afin d'homogénéiser les réponses entre elles. En effet chaque site ou pixel a une réponse en gain et en décalage (offset) qui lui est propre et qui peut évoluer pendant la durée d'utilisation du détecteur. Notamment l'offset dépend de la température de la scène observée et chaque pixel reçoit, en plus du flux utile de la scène observée, un flux parasite provenant de l'émission thermique des optiques de la caméra ou de celle des structures mécaniques réfléchie vers le détecteur par les optiques. Le taux de flux parasite dépend de la position du pixel dans l'image et varie en fonction de l'évolution thermique interne.

Les gains peuvent être calibrés en usine. Une seule référence de température suffit alors pour recalibrer les offsets en phase opérationnelle. On désigne ce mode de calibration par «calibration un point».

Classiquement, on calibre les pixels des caméras dont le détecteur est une barrette en utilisant comme référence de température un corps noir, régulé par un générateur Peltier, qu'il faut placer dans le trajet optique devant le détecteur afin qu'il soit vu de la même façon par tous les pixels. La température du corps noir est choisie en fonction de la température moyenne de la scène observée. Dans le cas d'un détecteur constitué par une barrette, le dispositif de balayage de la caméra permet d'amener le corps noir dans le champ et la correction peut alors être effectuée comme indiqué par exemple dans le document FR-A-2 720 175. Mais si le détecteur est matriciel, le corps noir doit être basculé dans le faisceau pour éclairer la totalité du détecteur, ce qui implique un Peltier monté sur une pièce mobile. Pour couvrir l'étendue géométrique nécessaire, sa dimension utile doit être importante.

On connait également (FR-A-2 698 700) un dispositif optique de calibration pour une caméra dont le diaphragme IR est placé entre deux groupes optiques appartenant à l'optique d'imagerie. L'optique de calibration, qui peut être interposée en amont de l'optique d'imagerie, est prévue de façon à ne pas modifier le champ. Le document EP-A-0 465 060, décrit un dispositif optique pour inverser la pupille et l'image d'une caméra.

La présente invention vise à fournir un dispositif de calibration permettant de se dispenser de la présence d'un corps noir monté dans une caméra thermique et pouvant être amené dans une position où il est vu par tous les pixels à la fois et de la même façon.

Dans ce but l'invention propose notamment une caméra thermique suivant la revendication 1.

Ainsi on peut réaliser, par une conjugaison optique appropriée, une moyenne photométrique de la scène observée. Vis à vis du détecteur l'image restituée est équivalente à un corps noir uniforme à la température moyenne de la scène. Les différentes configurations sont obtenues à l'aide d'un dispositif optomécanique simple.

L'optique de calibration sera généralement montée sur un organe orientable ayant une position où l'optique de calibration est sur le trajet optique et une position où elle est en dehors de ce trajet.

La caméra comporte en général un objectif à plusieurs lentilles (ou miroirs dans le cas d'un) et un oculaire : l'optique de calibration est alors interposable entre l'objectif et l'oculaire et dans certains cas remplacera une des lentilles de l'objectif.

Souvent la caméra infra-rouge est prévue pour être utilisée avec plusieurs champs différents obtenus avec différentes constitutions de l'objectif. Pour cela l'objectif comporte au moins un composant interchangeable pour donner des champs différents. En général les composants interchangeables sont montés sur un même organe rotatif. Dans ce cas il est avantageux de placer également l'optique de calibration sur cet organe. Il peut s'agir d'un barillet tournant autour d'un axe parallèle à l'axe optique de la caméra ou d'une boule tournant autour d'un axe oblique ou orthogonal à l'axe de la caméra.

Dans le cas de plusieurs champs d'observation, le dispositif de calibration est avantageusement prévu pour que le détecteur voit un champ intermédiaire entre le plus large et le plus étroit.

Les caractéristiques ci-dessus ainsi que d'autres apparaîtront mieux à la lecture de la description qui suit, de modes particuliers de réalisation, donnés à titre d'exemple non limitatif. La description se réfère aux dessins qui l'accompagnent, dans lesquels :
- la figure 1 est un diagramme montrant la constitution simplifiée d'une caméra infra-rouge à matrice de pixels, en mode imagerie ;
- la figure 2, similaire à la fig. 1, montre la caméra en mode calibration ;
- les figures 3, 4 et 5 montrent les élements optiques d'une caméra multi-champs respectivement en modes petit champ, grand champ et calibration ; et
- la figure 6 montre un montage possible des éléments interchangeables de l'optique sur une boule de commutation.

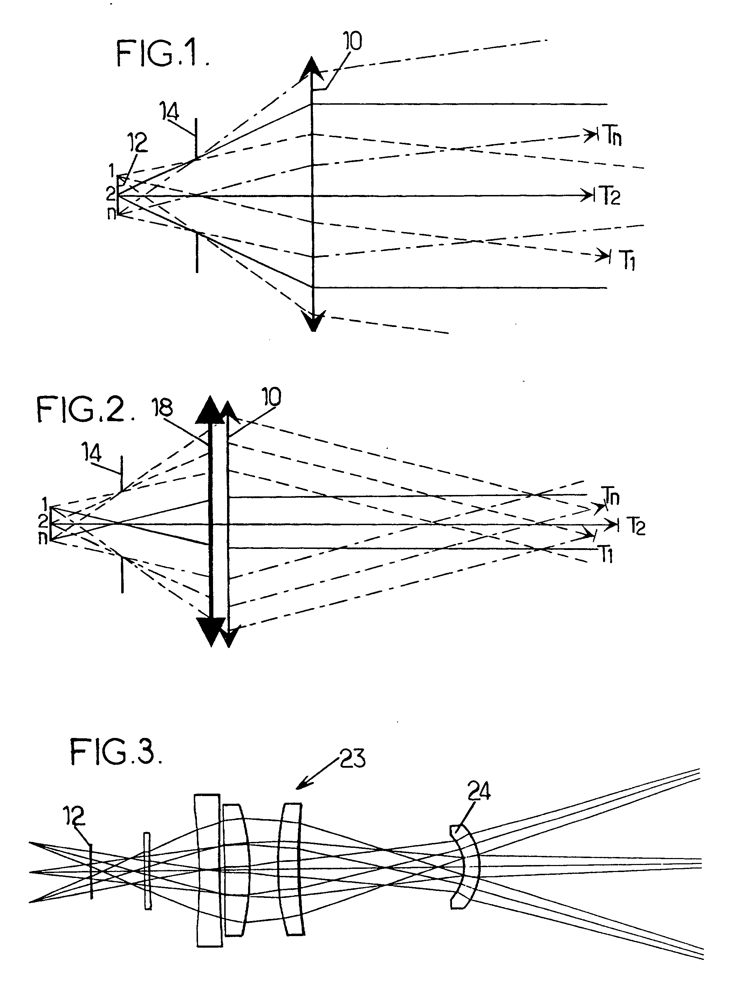

La figure 1 montre, sous forme d'une simple lentille 10, l'ensemble de l'optique d'imagerie de la caméra qui comprend dans la réalité un objectif généralement en plusieurs lentilles, et un oculaire, également en plusieurs lentilles. Lorsque le dispositif de calibration est éclipsé le flux reçu par chaque pixel du détecteur 12 provient d'une zone de la scène limitée au champ vu par le pixel à travers le diaphragme d'ouverture 14. Deux pixels consécutifs voient donc une partie différente d'une scène à l'infini. Par exemple sur la figure 1, le pixel 1 voit la température T1 ; le pixel 2 voit la température T2 ; le pixel n voit la température Tn. Ces températures peuvent être très différentes et la réponse des pixels ne permet pas de les calibrer les uns par rapport aux autres.

La figure 2 montre l'optique de calibration 18, encore représentée sous forme d'une simple lentille, en place. Cette optique est prévue pour que l'image se forme au niveau du diaphragme 14. Le diaphragme d'ouverture est conjugué avec la scène à l'infini. Tous les pixels voient alors le même champ dans la scène. Par exemple dans la scène observée, les pixels 1 , 2,... n reçoivent à part égale du flux aux températures T1, T2 ,... Tn. L'optique de calibration est dans la réalite composée d'une lentille simple ou de deux groupes de lentilles séparés par un intervalle d'air. Pour assurer la conjugaison du diaphragme d'ouverture avec la scène et maîtriser la valeur du champ de calibration , deux groupes de lentilles séparés sont utilisées.

Le dispositif de calibration est placé à l'intérieur de l'optique d'imagerie en amont du diaphragme d'ouverture et le plus près possible de l'optique frontale Le trajet optique entre le détecteur et l'optique de calibration est identique à celui de l'imagerie ce qui permet d'annuler par calibration le flux parasite ramené par les optiques du trajet optique commun avec l'imagerie. On peut choisir les rayons de courbure et la réflectivité des lentilles de calibration pour les optimiser en vue de réduire à une valeur acceptable l'écart de flux parasite ramené par les trajets optiques spécifiques.

Le dispositif permet de réaliser de façon passive une « calibration un point » sur la température moyenne de la scène. Les éléments mobiles sont uniquement des pièces mécaniques et optiques.

On décrira maintenant comment le dispositif de calibration est utilisable avec une voie imagerie multi-champs, la commutation d'un champ à l'autre étant obtenue par remplacement d'au moins un élément optique de l'objectif. Dans ce cas le champ de calibration est généralement choisi intermédiaire par rapport aux champs extrêmes d'imagerie, généralement au nombre de deux ou trois. Les lentilles de calibration sont implantées dans l'organe rotatif permettant le remplacement et le changement de champ.

La figure 3 montre une constitution possible de la voie d'imagerie à champ angulaire étroit. L'objectif 21 comprend un doublet de deux lentilles de grand diamètre qui peuvent être en des matériaux différents choisis pour athermaliser l'objectif. Il comprend encore une lentille relais intermédiaire 24 de réduction de champ. L'oculaire 23 est lui même constitué de trois lentilles, éventuellement en des matériaux différents, et forme l'image de la scène sur le détecteur 12 à travers le diaphragme 14.

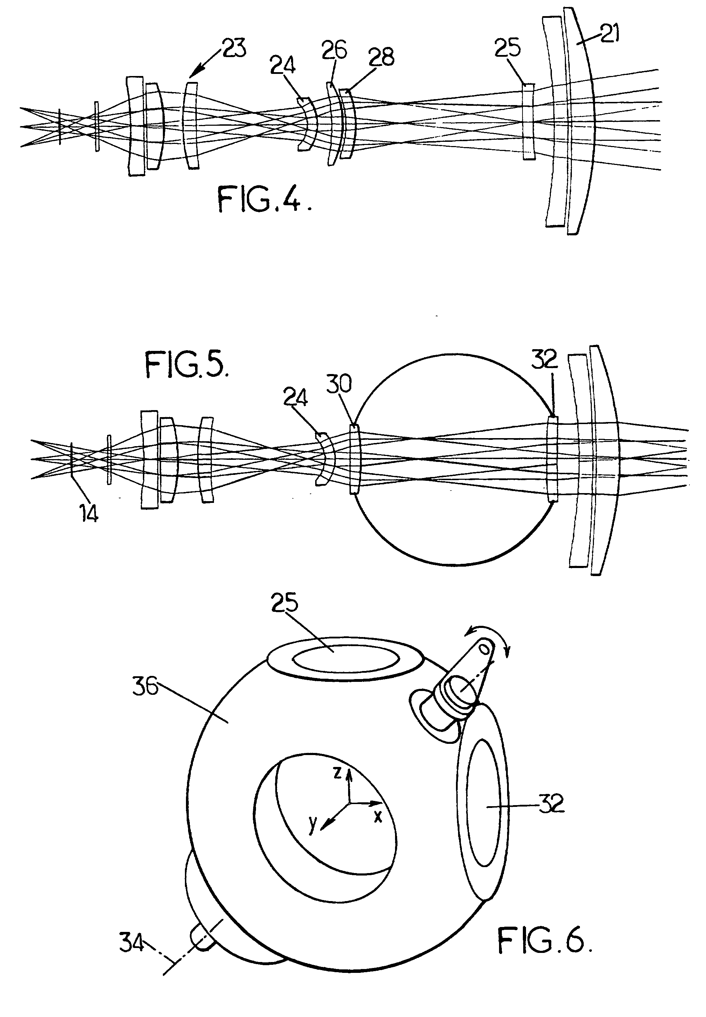

Pour passer à la voie grand champ (figure 4), une optique d'adaptation formée d'une lentille 25 divergente proche du doublet et d'une optique convergente proche de la lentille relais 24, constituée d'un ménisque convergent 26 et d'un ménisque divergent 28 dans le cas illustré sur la figure 4, est placée en amont de la lentille relais 24.

Enfin la voie de calibrage est constituée en substituant, au couple de ménisques 24, 26 et à la lentille 25, une optique constituée de deux composants 30 et 32 occupant des emplacements proches de ceux des composants de l'optique d'adaptation le long de l'axe optique. Dans le cas illustré sur la figure 5, ces composants sont deux ménisques convergents qui amènent l'ensemble de l'optique à former l'image de la scène dans le plan du diaphragme 14.

Comme le montre le trajet des rayons lumineux sur les figures 3 à 5, le champ angulaire de vision de la caméra lors du calibrage est intermédiaire entre le grand champ et le champ étroit de façon à constituer un compromis rendant le calibrage acceptable pour les deux champs d'observation.

Le passage du champ étroit à l'un des deux autres se fait par amenée d'une optique supplémentaire pratiquement au même emplacement dans les deux cas. Pour permettre la commutation, un organe rotatif 33 (figure 5) à trois positions de travail peut être prévu. Dans I' orientation correspondant au champ étroit, il laisse un libre passage au faisceau lumineux entre le doublet d'entrée et la lentille relais.

L'invention est également utilisable dans le cas d'une caméra à plus de deux champs d'observation.

On peut utiliser différents types d'organe rotatif Etant donné qu'il doit porter, pour constituer au moins une des voies d'observation (voie grand champ dans le cas ci-dessus) et la voie de calibration, deux composants écartés l'un de l'autre, une première solution consiste à utiliser un tambour orientable autour d'un axe orthogonal à l'axe optique. Les deux composants affectés à une même voie sont alors diamétralement opposés. Une autre disposition consiste à monter les composants optiques d'adaptation sur une boule 36 orientable sur le corps de la caméra autour d'un axe oblique par rapport à l'axe optique et intersectant cet axe. Dans le cas d'une caméra à deux champs d'observation, une solution avantageuse du point de vue de l'encombrement, montrée en figure 6, consiste à donner à l'axe d'orientation 34 de la boule 36 une inclinaison de 54, 74° et à disposer les trois chemins optiques dans la boule suivant les trois axes d'un trièdre trirectangle x y z orienté de façon que les trois chemins optiques s'alignent avec l'axe optique de la caméra pour trois orientations de la boule autour de son axe de rotation écartées de 120°.

## Revendications

1. Caméra thermique comportant :
- une optique d'imagerie dont une voie a un objectif à plusieurs lentilles (21) et un oculaire (23) permettant de fournir l'image d'une scène sur un détecteur à matrice bidimensionnelle de sites photosensibles à travers un diaphragme d'ouverture, et
- une optique de calibration interposable sur le trajet de la lumière entre l'objectif et l'oculaire, prévue pour que l'image de l'image de la scène se forme au niveau du diaphragme d'ouverture
**caractérisée en ce que** :
- l'optique d'imagerie comprend au moins une autre voie ayant une constitution d'objectif différente de celle de la première voie pour lui donner un champ différent, et
- l'optique de calibration est prévue pour que le détecteur voie un champ intermédiaire entre le champ le plus large et le champ le plus étroit de l'optique d'imagerie.

2. Caméra selon la revendication 1, **caractérisée en ce que** l'optique de calibration est placée à l'intérieur de l'optique d'imagerie et au plus près de l'objectif de façon que le trajet optique entre le détecteur et l'optique de calibration soit sensiblement identique à celui vers l'optique d'imagerie.

3. Caméra selon la revendication 2, **caractérisée en ce que** l'optique de calibration comporte deux lentilles (32, 30) de façon à permettre de choisir, à champ donné, les rayons de courbure des lentilles de calibration afin de réduire l'écart de flux parasite ramené par des trajets optiques spécifiques.

4. Caméra selon la revendication 3, **caractérisée en ce que** les composants optiques de la voie à champ large et les composants de l'optique de calibration sont montés sur une boule orientable sur le corps de la caméra autour d'un axe oblique par rapport à l'axe optique de la caméra et intersectant cet axe, les composants de la voie de calibration comportant deux lentilles placées de façon diamétralement opposée sur la paroi de la boule.

## Patentansprüche

1. Wärmekamera, umfassend:
- eine Abbildungsoptik, von der ein Kanal ein Objektiv mit mehreren Linsen (21) und ein Okular (23) aufweist, das die Erzeugung des Abbildes einer Szene auf einem Detektor mit einer zweidimensionalen Matrix von lichtempfindlichen Stellen durch eine Öffnungsblende gestattet, und
- eine Kalibrieroptik, die auf dem Weg des Lichts zwischen dem Objektiv und dem Okular einsetzbar ist und dazu vorgesehen ist, daß sich das Abbild des Abbildes der Szene auf Höhe der Öffnungsblende bildet, **dadurch gekennzeichnet, daß**:
- die Abbildungsoptik mindestens einen weiteren Kanal besitzt, der eine andere Objektivausbildung als der erste Kanal besitzt, um ihm ein anderes Feld zu verleihen, und
- die Kalibrieroptik dafür vorgesehen ist, daß der Detektor ein Zwischenfeld zwischen dem weitesten Feld und engsten Feld der Abbildungsoptik sieht.

2. Kamera nach Anspruch 1, **dadurch gekennzeichnet, daß** die Kalibrieroptik im Inneren der Abbildungsoptik und möglichst nahe bei dem Objektiv angeordnet ist, so daß der optische Weg zwischen dem Detektor und der Kalibrieroptik im wesentlichen mit dem Weg zur Abbildungsoptik identisch ist.

3. Kamera nach Anspruch 2, **dadurch gekennzeichnet, daß** die Kalibrieroptik zwei Linsen (32, 30) aufweist, so daß bei gegebenem Feld die Krümmungsradien der Kalibrierlinsen so gewählt werden können, daß die Abweichung des durch spezifische optische Wege rückgeführten Störflusses verringert wird.

4. Kamera nach Anspruch 3, **dadurch gekennzeichnet, daß** die optischen Komponenten des Weitfeld-Kanals und die Komponenten der Kalibrieroptik auf einer Kugel montiert sind, die auf dem Körper der Kamera um eine Achse schwenkbar ist, die zur optischen Achse der Kamera schräg ist und diese Achse schneidet, wobei die Komponenten des Kalibrierkanals zwei Linsen aufweisen, die diametral einander entgegengesetzt auf der Wand der Kugel angeordnet sind.

## Claims

1. A thermal camera comprising
- an optical imaging system comprising a path with a multi-lens objective (21) and an eyepiece (23) for providing an image of a scene on a bidimensional-matrix detector of photosensitive sites via an aperture diaphragm, and
- an optical calibration system insertable in the path of the light between the objective and the eyepiece and designed so that the image of the image of the scene is formed at the aperture diaphragm
**characterised in that**
- the optical imaging system comprises at least one other path in which the objective has a different constitution from that in the first path so as to obtain a different field, and
- the optical calibration system is designed so that the detector detects a field intermediate between the widest field and the narrowest field of the optical imaging system.

2. A camera according to claim 1, **characterised in that** the optical calibration system is disposed inside the optical imaging system and nearest the objective, so that the optical path between the detector and the optical calibration system is substantially identical to the path to the imaging system.

3. A camera according to claim 2, **characterised in that** the optical calibration system comprises two lenses (32, 30) so that the radii of curvature of the calibration lenses can be chosen for a given field in order to reduce the deviation in the interfering flux returned by the specific optical paths.

4. A camera according to claim 3, **characterised in that** the optical components of the wide-field path and the components of the optical calibration system are mounted on a sphere adjustable on the camera body around an axis at an angle to and intersecting the optical axis of the camera, the components of the calibration path comprising two lenses in diametrically opposite positions on the surface of the sphere.
